# EUROPÄISCHE PATENTSCHRIFT

(11) **EP 3 571 402 B1**
(45) Veröffentlichungstag und Bekanntmachung des Hinweises auf die Patenterteilung: **03.03.2021**
(21) Anmeldenummer: 18700128.4
(22) Anmeldetag: 09.01.2018
(51) Int. Cl.: F03D 80/60

(54) **GONDEL EINER WINDKRAFTANLAGE**
NACELLE OF A WIND POWER PLANT
NACELLE D'ÉOLIENNE

(30) Priorität: 23.01.2017 DE 102017101207
(43) Veröffentlichungstag der Anmeldung: 27.11.2019
(73) Patentinhaber: RWE Renewables GmbH, 45145 Essen (DE)
(72) Erfinder: SCHLÜTER, Thorsten, 25355 Barmstedt (DE)
(74) Vertreter: Cohausz & Florack
(86) Internationale Anmeldenummer: PCT/EP2018/050452
(87) Internationale Veröffentlichungsnummer: WO 2018/134083

(56) Entgegenhaltungen:
- EP-A2- 2 136 077
- DE-A1- 10 351 844
- KR-A- 20140 087 125
- US-A1- 2010 026 010
- US-A1- 2012 001 437

## Beschreibung

Die Erfindung betrifft eine Gondel einer Windkraftanlage, wobei die Gondel mindestens ein Gehäuse mit einer Außenseite und einer Innenseite und mindestens eine innerhalb des Gehäuses angeordnete und zu kühlende Komponente umfasst. Darüber hinaus betrifft die Erfindung eine Windkraftanlage mit der Gondel und eine Verwendung.

Heutzutage werden vermehrt Windenergiesysteme bzw. Windparks für die Produktion von elektrischer Energie eingesetzt. Bevorzugt werden hierbei sogenannte Offshore-Windenergiesysteme errichtet. Grund hierfür ist, dass im Vergleich zu Onshore-Windenergiesystemen die erwartete mittlere Windgeschwindigkeit und damit der zu erwartende Energieertrag aufgrund der Offshore-Lage eines derartigen Windenergiesystems in der Regel höher ist.

Ein Windenergiesystem kann eine oder mehrere Windkraftanlagen umfassen, die beispielsweise mit einer (Offshore-)Umspannstation verbunden sind. Eine Windkraftanlage umfasst im Allgemeinen einen Rotor mit einer Nabe und mit einer Mehrzahl von Rotorblättern (z.B. drei). Der Rotor ist an einer Gondel (auch Maschinengondel genannt) verbunden. Die Gondel ist in der Regel drehbar auf einem Turm befestigt.

Die Gondel weist ein Gehäuse auf. Das Gehäuse kann mindestens eine zu kühlende Komponente, wie eine elektrische Komponente und/oder eine mechanische Komponente, umfassen. Eine elektrische Komponente ist vorliegend eine Komponente, welche mit einer elektrischen Größe betrieben wird und/oder eine elektrische Größe erzeugt.

Insbesondere kann die Gondel als elektrische Komponente mindestens einen Transformator umfassen. Dieser ist in der Regel mit einer Einhausung versehen bzw. in einem Transformatorgehäuse angeordnet, welches wiederum in dem Gehäuse der Gondel angeordnet ist. Ähnliches gilt für weitere zu kühlende Komponenten. Aufgrund der Verluste bzw. Verlustleistung muss ein derartiger Transformator gekühlt werden. In Gondeln des Standes der Technik sind komplexe Kühlungssysteme zur Kühlung der mindestens einen Komponente verbaut. Die bekannten Kühlungssysteme haben gemein, dass sie aktive Kühlungssysteme sind. Aktive Kühlungssysteme zeichnen sich dadurch aus, dass sie mit Hilfe eines Lüfters oder einer Pumpe die Wärme von der zu kühlenden Komponente abtransportieren.

Wie jedoch bereits beschrieben wurde, sind entsprechende Systeme komplex und wartungsintensiv. Gerade bei Offshore-Windkraftanlagen sind Wartungen oder gar Reparaturen innerhalb einer Gondel mit hohem Aufwand und entsprechenden Kosten verbunden.

Aus US2010/0026010 ist eine Gondel gemäß dem Oberbegriff von Anspruch 1 bekannt.

Der Erfindung liegt daher die Aufgabe zugrunde, eine Gondel für eine Windkraftanlage zur Verfügung zu stellen, welche eine ausreichende, insbesondere verbesserte Kühlung von mindestens einer elektrischen Komponente der Gondel in einfacherer Weise ermöglicht.

Die Aufgabe wird gemäß einem ersten Aspekt der Erfindung durch eine Gondel einer Windkraftanlage gemäß Anspruch 1 gelöst. Die Gondel umfasst mindestens ein Gehäuse mit einer Außenseite und einer Innenseite. Die Gondel umfasst mindestens eine innerhalb des Gehäuses angeordnete und zu kühlende Komponente. Die Gondel zeichnet sich dadurch aus, dass mindestens eine Kühlrippe an der Außenseite des Gehäuses angeordnet ist.

Im Gegensatz zum Stand der Technik ist bei der erfindungsgemäßen Gondel an der Außenseite mindestens eine Kühlrippe, vorzugsweise eine Mehrzahl von Kühlrippen, vorgesehen, um eine verbesserte Wärmeableitung der Wärme bereitzustellen, die durch die mindestens eine in der Gondel angeordnete und zu kühlende Komponente hervorgerufen wird. In einfacherer Weise kann eine ausreichende Kühlung zur Verfügung gestellt werden, Komplexe aktive Kühlungssysteme in der Gondel können zumindest weniger komplex gestaltet sein und insbesondere entfallen. Der Wartungs- und Reparaturaufwand und damit die entsprechenden Kosten können signifikant reduziert werden.

Eine Windkraftanlage verfügt über eine Gondel, die auf dem Turm angeordnet ist. An der Gondel ist ein Rotor mit einer Nabe und Rotorblättern befestigt. Im Betrieb wird die Gondel mit dem Rotor abhängig von der augenblicklichen Windrichtung ausgerichtet. Hierzu kann eine Windrichtungsnachführungsvorrichtung vorgesehen sein.

Die Gondel verfügt über ein Gehäuse. Das Gehäuse umfasst eine Außenseite bzw. Außenwand und eine Innenseite bzw. Innenwand. Beispielsweise ist das Gehäuse aus Metall gebildet. Im Inneren des Gehäuses ist mindestens eine Komponente, insbesondere zwei oder mehr Komponenten, angeordnet, welche aufgrund der im Betrieb der mindestens einen Komponente entstehenden Wärme gekühlt werden müssen.

Zur Kühlung ist erfindungsgemäß vorgesehen, mindestens eine Kühlrippe (auch Radiatorfinne genannt) an der Außenseite des Gehäuses anzuordnen. Insbesondere ist erkannt worden, dass eine Kühlung der mindestens einen zu kühlenden Komponente im Wesentlichen nur während des Betriebs der Windkraftanlage erforderlich ist. Da während des Betriebs der Windkraftanlage davon ausgegangen werden kann, dass ein Wind bzw. eine Luftbewegung mit einer ausreichenden Windstärke vorliegt, kann dieser Luftstrom nicht nur zum Antreiben des Rotors, sondern erfindungsgemäß gleichzeitig zur Kühlung verwendet werden. Insbesondere ist erkannt worden, dass mit höherer Windstärke die durch die mindestens eine im Gehäuse implementierte Komponente erzeugte Wärme steigt und gleichzeitig die Kühlleistung steigt. Diese Erkenntnis macht sich die Erfindung zur Nutze, indem mindestens eine Kühlrippe an der Außenseite angeordnet ist.

Eine Kühlrippe kann aus einem Metall (mit guter Wärmeleitfähigkeit) sein und beispielsweise flächig gebildet sein. Das Seitenprofil einer Kühlrippe kann plan bzw. flach sein. Eine Kühlrippe kann beispielsweise durch Schweißen, Nieten, Verschrauben, etc. an der Außenseite befestigt sein.

Gemäß einer ersten Ausführungsform der anmeldungsgemäßen Gondel kann die mindestens eine Kühlrippe parallel zu der Rotorachse angeordnet sein. Insbesondere können zwei oder mehr Kühlrippen parallel zu der Rotorachse angeordnet sein. Unter der Rotorachse ist vorliegend die Drehachse des an der Gondel befestigten Rotors zu verstehen. Diese Rotorachse ist eine im Wesentlichen horizontale Achse. Im Vergleich zu einer vertikalen Ausrichtung der Kühlrippen kann eine verbesserte Kühlung erreicht werden.

Gemäß einer bevorzugten Ausführungsform der anmeldungsgemäßen Gondel kann die mindestens eine Kühlrippe in Bezug zu der Rotorachse um einen Neigungswinkel geneigt sein. Unter einer Neigung ist vorliegend insbesondere zu verstehen, dass eine Kühlrippe nicht parallel zur Rotorachse ausgerichtet ist, sondern mit einem Neigungswinkel zu dieser Achse. Der Neigungswinkel kann zwischen 2° und 85°, insbesondere zwischen 5° und 65°, insbesondere bevorzugt zwischen 5° und 20° liegen. Tests haben gezeigt, dass eine nicht parallele Ausrichtung zur Rotorachse, sondern mit einem Neigungswinkel insbesondere bevorzugt zwischen 5° und 20° zwischen eine höhere Kühlleistung - im Vergleich zu einer horizontalen Ausrichtung der Kühlrippen - erreicht werden kann.

Vorzugsweise können eine Mehrzahl von Kühlrippen im Wesentlichen parallel zueinander angeordnet sein. Mit anderen Worten können diese Kühlrippen den gleichen Neigungswinkel aufweisen. Der Abstand zwischen zwei Kühlrippen kann bevorzugt zwischen 1 bis 10 cm. Liegen. Eine derartige Ausbildung bietet eine gute Kühlleistung.

Es sei angemerkt, dass bei einer Ausführungsform, bei der eine Kühlrippe einen gebogenen Verlauf aufweist, der Neigungswinkel insbesondere der Winkel zwischen der Rotorachse und der über die Länge der Kühlrippe gemittelten Neigung (oder Steigung) ist.

Um eine besonders hohe Kühlleistung zu erzielen, kann in einer besonders bevorzugten Ausführungsform eine Mehrzahl von geneigt angeordneten Kühlrippen der Höhe nach (von klein nach groß) aus Sicht des Rotors gestaffelt angeordnet sein. Gemäß der Ausführungsform können mindestens zwei Kühlrippen an der Außenseite des Gehäuses angeordnet sein. Die erste Kühlrippe (der zumindest zwei Kühlrippen) kann im Vergleich zu der mindestens einen weiteren Kühlrippe (der zumindest zwei Kühlrippen) einen geringeren Abstand zu einem an der Gondel angeordneten Rotor aufweisen. Die Höhe der ersten Kühlrippe kann zumindest geringer als die Höhe der mindestens einen weiteren Kühlrippe sein. Beispielsweise kann die weitere Kühlrippe zumindest um 5%, vorzugsweise 8%, höher als die erste Kühlrippe gebildet sein. Dies ermöglicht eine noch bessere Kühlleistung durch den Wind. Vorzugsweise können sämtliche angeordnete Kühlrippen unterschiedliche Höhen aufweisen. Die jeweils einer Kühlrippe nachgelagerte Kühlrippe (von dem Rotor ausgesehen) kann eine größere Höhe aufweisen.

Darüber hinaus kann die mindestens eine zu kühlende Komponente mindestens eine mechanische Komponente sein. Insbesondere kann die mechanische Komponente ein Getriebe sein. Alternativ oder zusätzlich kann die mindestens eine zu kühlende Komponente eine elektrische Komponente sein. Beispielhafte elektrische Komponenten sind Transformatoren oder Generatoren. Beispielsweise kann ein Generator über ein Getriebe mit dem Rotor verbunden sein, um die kinetische Energie des Windes in elektrische Energie bzw. Leistung zu wandeln. Der in dem Gehäuse vorgesehene Transformator kann eingesetzt werden, um die produzierte Leistung auf ein vorbestimmtes Spannungsniveau zu transformieren. Entsprechende Komponente müssen während ihres Betriebs gekühlt werden. Es versteht sich, dass weitere zu kühlende und/oder nicht zu kühlende Komponenten in dem Gehäuse der Gondel integriert sein können.

Um eine gute Wärmeableitung von der zu kühlenden Komponente über die mindestens eine Kühlrippe zu ermöglichen, kann gemäß einer weiteren Ausführungsform der anmeldungsgemäßen Gondel zwischen einer Innenseite des Gehäuses und der mindestens einen zu kühlenden Komponente eine Wärmeleitung gebildet sein. Insbesondere kann zwischen dem mindestens einen Bauteil der zu kühlenden Komponente, welches die (Haupt-)Wärmequelle bildet, und der Innenseite des Gehäuses eine Wärmeleitung gebildet sein. Von der Innenseite des Gehäuses kann dann die erzeugte Wärme über die Außenseite und die daran angeordnete mindestens eine Kühlrippe durch den Wind abgeleitet werden.

Bei einer besonders bevorzugten Ausführungsform kann vorgesehen sein, dass die Wärmeleitung durch eine Gasverbindung gebildet ist. Insbesondere kann die zu kühlende Komponente in dem Gehäuse derart angeordnet sein, dass eine Luftverbindung zwischen der Innenseite und der zu kühlenden Komponente existiert. Beispielsweise kann innerhalb des Gehäuses mindestens ein Durchbruch vorgesehen sein, der einen Luftfluss zwischen der zu kühlende Komponente und der Innenseite ermöglicht. Vorzugsweise können mehrere Durchbrüche vorgesehen sein, um einen zirkulierten Kühlluftfluss bereitzustellen. Mit anderen Worten kann die erwärmte Luft in Richtung der Innenseite über einen ersten Luftkanal gelenkt und die abgekühlte Luft über mindestens einen weiteren Luftkanal (zurück) zur zu kühlenden Komponente gelenkt werden. Um den Luftfluss zu bewirken, kann gemäß einer Ausführungsform ein Ventilator vorgesehen sein.

Darüber hinaus kann vorgesehen sein, dass eine zu kühlende Komponente zumindest nicht vollständig eingehaust ist. Beispielsweise kann ein Transformator ohne eine Einhausung in dem Gehäuse angeordnet sein.

Alternativ oder zusätzlich kann bei einer weiteren Ausführungsform vorgesehen sein, dass eine zu kühlende Komponente die Innenseite des Gehäuses der Gondel zumindest teilweise direkt (oder über eine Wärmeverbindung z.B. in Form einer Metallverbindung) kontaktiert. Durch eine entsprechende Anordnung einer zu kühlenden Komponente kann die entstehende Wärme besonders gut über die mindestens eine Kühlrippe abgeführt werden.

Ein weiterer Aspekt der Erfindung ist eine Windkraftanlage umfassend eine zuvor beschriebene Gondel. Die Windkraftanlage kann Bestandteil eines Windenergiesystems bzw. Windparks sein. Vorzugsweise kann die Windkraftanlage eine Offshore-Windkraftanlage sein. Alternativ kann es sich bei der Windkraftanlage auch um eine Onshore-Windkraftanlage handeln.

Ein noch weiterer Aspekt der Erfindung ist eine Verwendung gemäß Anspruch 12. Die erfindungsgemäße Verwendung ermöglicht eine verbesserte Kühlung und/oder einen (Teil-)Verzicht auf aktive und komplexe Kühlungssysteme innerhalb des Gehäuses der Gondel.

Es gibt nun eine Vielzahl von Möglichkeiten, die erfindungsgemäße Windkraftanlage, die erfindungsgemäße Gondel und die Verwendung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Windkraftanlage gemäß der vorliegenden Anmeldung,
- Fig. 2: eine schematische Ansicht eines Ausführungsbeispiels einer Gondel gemäß der vorliegenden Anmeldung, und
- Fig. 2a: eine schematische Ansicht eines Ausführungsbeispiel einer Kühlrippe gemäß der vorliegenden Anmeldung.

In den Figuren werden für gleiche Elemente gleiche Bezugszeichen verwendet.

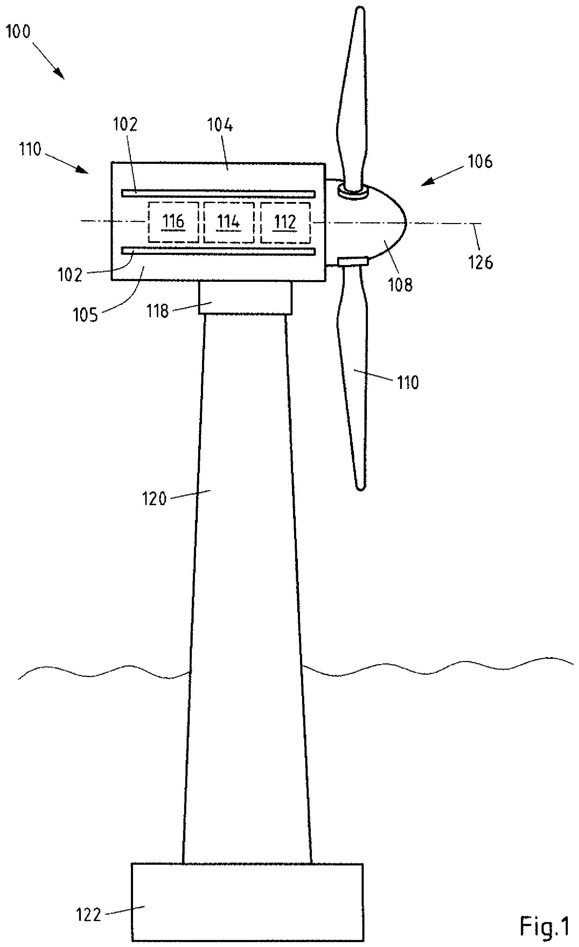

Figur 1 zeigt eine schematische Ansicht eines Ausführungsbeispiels einer Windkraftanlage 100 gemäß der vorliegenden Anmeldung mit einem Ausführungsbeispiel einer Gondel 101 gemäß der vorliegenden Anmeldung. Die Windkraftanlage 100 ist insbesondere eine Offshore-Windkraftanlage 100.

Die dargestellte Windkraftanlage 100 verfügt über einen Turm 120, der auf einem Fundament 122 angeordnet ist. Die Gondel 101 ist vorliegend über eine Windrichtungsnachführungsvorrichtung 118 drehbar an dem Turm 120 befestigt. Die Windrichtungsnachführungsvorrichtung 118 ist insbesondere eingerichtet, die Gondel 101 und den daran angeordneten Rotor 106 umfassend eine Nabe 108 und Rotorblätter 110 abhängig von der aktuellen Windrichtung für einen optimalen Stromertrag auszurichten. Die Windrichtungsnachführungsvorrichtung 118 kann zum Ausrichten der Gondel 101 mindestens einen Stellmotor umfassen. Beispielsweise kann die Windkraftanlage 100 über eine (nicht gezeigte) Messeinrichtung (z.B. Windrichtungsgeber) verfügen, um zumindest die augenblickliche Windrichtung zu messen und der Windrichtungsnachführungsvorrichtung 118 bereitzustellen.

Die Gondel 101 umfasst ein Gehäuse 104 mit einer Außenseite 105 und einer Innenseite. Im Inneren des Gehäuses 101 kann eine Vielzahl von zu kühlenden Komponenten 112, 114, 116 angeordnet sein. Vorliegend sind ein Getriebe 112, ein Generator 114 und ein Transformator 116 angeordnet. Aufgrund der im Betrieb dieser mechanischen und/oder elektrischen Komponenten 112, 114, 116 entstehenden Wärme ist eine Kühlung der Komponenten 112, 114, 116 erforderlich.

Es versteht sich, dass gemäß anderen Varianten andere und/oder weitere zu kühlende Komponenten vorgesehen sein können. Es versteht sich ferner, dass auch nicht zu kühlende Komponenten in der Gondel 101 angeordnet sein können.

Vorliegend ist zur Kühlung an der Außenseite 105 insbesondere eine Mehrzahl von Kühlrippen 102 angeordnet (zur besseren Übersicht sind lediglich zwei Kühlrippen 102 dargestellt). Wie aus der Figur 1 zu erkennen ist, sind im vorliegenden Ausführungsbeispiel die Kühlrippen 102 horizontal angeordnet. Insbesondere sind die Kühlrippen 102 parallel zur Rotorachse 126 angeordnet. Eine Kühlrippe 102 kann vorzugsweise aus einem Metall gebildet und beispielsweise stoffschlüssig (z.B. durch eine Schweißverbindung) an der Außenseite 105 des Gehäuses 104 befestigt sein.

Um die durch eine der Komponenten 112, 114, 116 erzeugte Wärme abzuführen, ist insbesondere eine Wärmleitung von der jeweiligen Komponente 112,114, 116 zur Innenseite des Gehäuses 104 gebildet. Dann kann die an die Innenseite geleitete Wärme über die an der Außenseite 105 angeordnete mindestens eine Kühlrippe 102 durch die/den Luftströmung/Wind abgeführt werden.

Die Wärmeleitung kann auf unterschiedliche Weise hergestellt werden. Bei einer Ausführungsform ist zwischen der zu kühlenden Komponente 112, 114, 116 und der Innenseite des Gehäuses 104 mindestens eine Gasverbindung (vorzugsweise Luftverbindung) gebildet. Insbesondere können in dem Gehäuse 104 der Gondel 101 ein oder mehrere Durchbruch/brüche vorgesehen sein, um einen Luftfluss von der zu kühlenden Komponente 112,114, 116 zur Innenseite (und wieder zurück) zu erlauben. Insbesondere kann auf eine vollständige Einhausung einer zu kühlenden Komponente 112,114,116 verzichtet werden. Es versteht sich, dass der Luftfluss durch aktive Mittel (z.B. Ventilator) zusätzlich unterstützt werden kann.

Darüber hinaus kann die Anordnung der Komponenten 112, 114, 116 in dem Gehäuse 104 im Vergleich zum Stand der Technik geändert sein. Insbesondere kann das mindestens eine Bauteil, welches eine Wärmequelle einer zu kühlenden Komponente 112, 114, 116 darstellt, in der Nähe der Innenseite des Gehäuses 104 angeordnet sein. Besonders bevorzugt kann die Innenseite des Gehäuses 104 von diesem Bauteil direkt (oder über z.B. eine metallischen Wärmeleiter) kontaktiert werden. Hierdurch kann eine besonders gute Wärmeleitung zu den Kühlrippen 102 hergestellt werden.

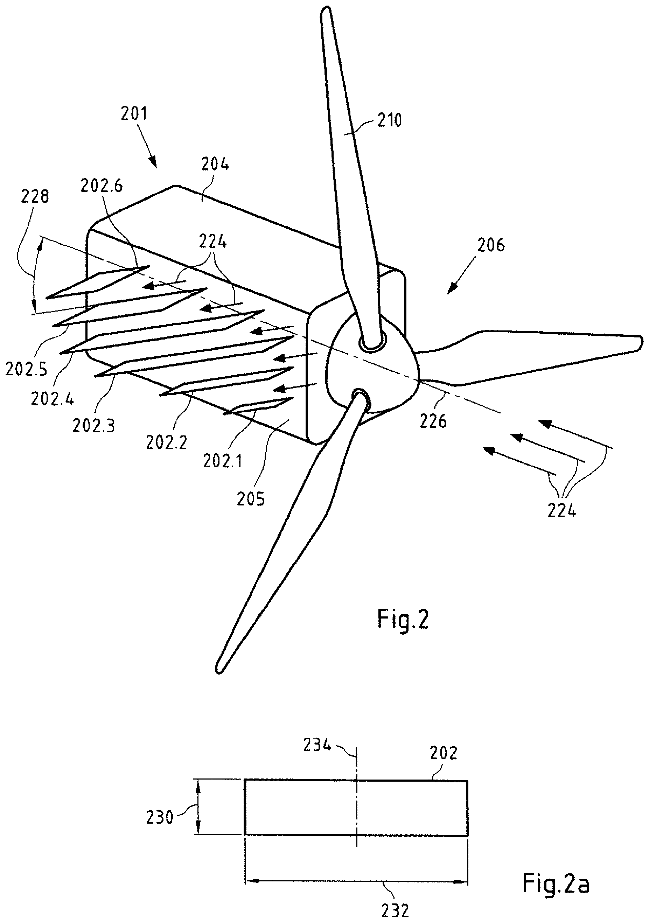

Die Figur 2 zeigt schematisch ein weiteres, besonders bevorzugtes Ausführungsbeispiel einer Gondel 201 gemäß der vorliegenden Anmeldung. Zu Gunsten einer besseren Übersicht wurde die mindestens eine in dem Gehäuse 204 der Gondel 201 angeordnete und zu kühlende Komponente nicht dargestellt. Diese kann jedoch - wie oben beschrieben wurde - über eine Wärmeleitung zur Innenseite des Gehäuses 204 verfügen.

An der Außenseite 205 des Gehäuses 204 ist eine Mehrzahl von Kühlrippen 202.1 bis 202.6 befestigt. Es versteht sich, dass gemäß anderen Varianten der Anmeldung an weiteren Bereich der Außenseite 205 des Gehäuses 204 weitere (nicht gezeigte) Kühlrippen angeordnet sein können. Die Wahl der Bereiche der Außenseite, an denen eine oder mehrere Kühlrippen angeordnet sind, kann von der Nähe der in dem Gehäuse 204 angeordneten, zu kühlenden Komponenten und/oder von an der Außenseite 205 angeordneten weiteren Bauteilen, wie Messeinrichtung(en), abhängen.

Die schematisch dargestellte Anordnung der Kühlrippen 202.1 bis 202.6 stellt eine besonders gute Kühlwirkung zur Verfügung. So sind vorliegend die Kühlrippen 202.1 bis 202.6 im Vergleich zur (horizontalen) Rotorachse 226 um einen Neigungswinkel 228 geneigt. Vorliegend sind sämtliche Kühlrippen 202.1 bis 202.6 im Wesentlichen parallel zueinander ausgerichtet. Der Neigungswinkel 228 liegt vorzugsweise zwischen 5° und 20°. Durch die Neigung wird ein Luftstrom (insbesondere Wind) 224 mit einer längeren Verweilzeit an den Kühlrippen 202.1 bis 202.6 vorbeigeführt. Eine verbesserte Kühlwirkung kann erreicht werden.

Es versteht sich, dass bei anderen Varianten nicht sämtliche mit dem gleichen Neigungswinkel geneigt sein müssen.

Neben dem Vorsehen einer Neigung in Bezug zur Rotorachse 226 ist vorzugsweise zusätzlich eine gestaffelte Anordnung (von klein zu groß) der Kühlrippen 202.1 bis 202.6 vorgesehen. Wie der Figur 2 zu entnehmen ist, weist insbesondere eine erste Kühlrippe 202.1 im Vergleich zu einer weiteren Kühlrippe 202.2 bis 202.6 eine geringere Höhe 230 auf. In entsprechender Weise ist die Höhe 230 der Kühlrippe 202.2 geringer als die Höhe 230 der Kühlrippen 202.3 bis 202.6, die Höhe 230 der Kühlrippe 202.3 geringer als die Höhe 230 der Kühlrippen 202.4 bis 202.6, die Höhe 230 der Kühlrippe 202.4 geringer als die Höhe 230 der Kühlrippen 202.5 bis 202.6 und die Höhe 230 der Kühlrippe 202.5 geringer als die Höhe 230 der Kühlrippe 202.6.

Figur 2a zeigt eine Seitenansicht einer beispielhaften Kühlrippe 202. Die dargestellte Kühlrippe 200 ist flächig gebildet. Vorliegend weist sie ein planes bzw. flaches Seitenprofil auf. Grundsätzlich sind auch anderen Formen denkbar. Die Höhe der Kühlrippe 202 ist mit dem Bezugszeichen 230 und die Länge der Kühlrippe 202 mit dem Bezugszeichen 232 bezeichnet. Die Mitte 234 der Länge 232 ist mit dem Bezugszeichen 234 bezeichnet.

Wie oben beschrieben wurde, ist vorliegend die Höhe 230 der ersten Kühlrippe 202.1 im Vergleich zu der weiteren Kühlrippe 202.2 geringer. Hierbei ist der Abstand zwischen dem Rotor 206, insbesondere der durch die Rotorblätter 210 aufgespannten Ebene, und der ersten Kühlrippe 202.1, insbesondere der Mitte 234 der Länge 232 der ersten Kühlrippe 202.1, geringer als der Abstand zwischen dem Rotor 206, insbesondere der durch die Rotorblätter 210 aufgespannten Ebene, und der weiteren (direkt benachbarten) Kühlrippe 202.2, insbesondere der Mitte 234 der Länge 232 der weiteren Kühlrippe 202.2.

Vorzugsweise kann eine gestaffelte Anordnung vorliegen. Insbesondere kann die Höhe 230 der Kühlrippen 202.1 bis 202.6 mit größer werdendem Abstand (z.B. kontinuierlich) ansteigen. Vorzugsweise kann die Kühlrippe 202.6 mit dem größten Abstand zum Rotor 206 die größte Höhe 230 aufweisen und die Kühlrippe 202.1 mit dem geringsten Abstand zum Rotor 206 die niedrigste Höhe 230 aufweisen, die vorzugsweise zwischen 20 % und 50 % der maximalen Höhe 230 der Kühlrippe 202.6 liegen kann.

Indem eine nach der Höhe 230 vorgenommene Staffelung und die beschriebene Neigung der Kühlrippen202.1 bis 202.6 vorgesehen ist, kann der Luftstrom bzw. Wind optimal zur Kühlung der im Gehäuse angeordneten, zu kühlenden Komponenten verwendet werden.

## Patentansprüche

1. Gondel (101, 201) einer Windkraftanlage (100), umfassend:
- mindestens ein Gehäuse (104, 204) mit einer Außenseite (105, 205) und einer Innenseite, und
- mindestens eine innerhalb des Gehäuses (104, 204) angeordnete und zu kühlende Komponente (112, 114, 116), wobei
- mindestens zwei Kühlrippen (102, 202, 202.1, 202.2, 202.3, 202.4, 202.5, 202.6) an der Außenseite (105, 205) des Gehäuses (104, 204) angeordnet sind,
- mindestens zwei Kühlrippen (102, 202, 202.1, 202.2, 202.3, 202.4, 202.5, 202.6) parallel zu der Rotorachse (126, 226) angeordnet sind oder mindestens eine Kühlrippe (102, 202, 202.1, 202.2, 202.3, 202.4, 202.5, 202.6) in Bezug zu der Rotorachse (126, 226) um einen Neigungswinkel (228) geneigt ist, wobei der Neigungswinkel (228) zwischen 2° und 85° ist,
**dadurch gekennzeichnet, dass**
- eine erste Kühlrippe (102, 202, 202.1, 202.2, 202.3, 202.4, 202.5, 202.6) im Vergleich zu der mindestens einen weiteren Kühlrippe (102, 202, 202.1, 202.2, 202.3, 202.4, 202.5, 202.6) einen geringeren Abstand zu einem an der Gondel (101, 201) angeordneten Rotor (106, 206) aufweist, und
- die Höhe (230) der ersten Kühlrippe (102, 202, 202.1, 202.2, 202.3, 202.4, 202.5, 202.6) zumindest geringer ist als die Höhe (230) der mindestens einen weiteren Kühlrippe (102, 202, 202.1, 202.2, 202.3, 202.4, 202.5, 202.6).

2. Gondel (101, 201) nach Anspruch 1, **dadurch gekennzeichnet, dass** der Neigungswinkel (228) zwischen 5° und 65° liegt.

3. Gondel (101, 201) nach Anspruch 2, **dadurch gekennzeichnet, dass** der Neigungswinkel zwischen 5° und 20° liegt.

4. Gondel (101, 201) nach Anspruch 1, 2 oder 3, **dadurch gekennzeichnet, dass** eine Mehrzahl von Kühlrippen (102, 202, 202.1, 202.2, 202.3, 202.4, 202.5, 202.6) in Bezug zu der Rotorachse (126, 226) um den gleichen Neigungswinkel (228) geneigt ist.

5. Gondel (101, 201) nach einem der vorherigen Ansprüche, **dadurch gekennzeichnet, dass**
- die mindestens eine zu kühlende Komponente (112, 114, 116) mindestens eine mechanische Komponente (112) ist,
und/oder
- die mindestens eine zu kühlende Komponente (112, 114, 116) mindestens eine elektrische Komponente (114, 116) ist.

6. Gondel (101, 201) nach Anspruch 5, **dadurch gekennzeichnet, dass** die mechanische Komponente (112) ein Getriebe (112) ist.

7. Gondel (101, 201) nach Anspruch 5, **dadurch gekennzeichnet, dass** die elektrische Komponente (114, 116) ein Transformator (116) oder ein Generator (114) ist.

8. Gondel (101, 201) nach einem der vorherigen Ansprüche, **dadurch gekennzeichnet, dass** zwischen einer Innenseite des Gehäuses (104, 204) und der mindestens einen zu kühlenden Komponente (112, 114, 116) eine Wärmeleitung gebildet ist.

9. Gondel (101, 201) nach Anspruch 8, **dadurch gekennzeichnet, dass** die Wärmeleitung durch eine Gasverbindung gebildet ist.

10. Windkraftanlage (100) umfassend eine Gondel (101, 201) nach einem der vorherigen Ansprüche.

11. Windkraftanlage (100) nach Anspruch 10 **dadurch gekennzeichnet, dass** die Windkraftanlage (100) eine Offshore-Windkraftanlage (100) ist.

12. Verwendung von mindestens zwei Kühlrippen (102, 202, 202.1, 202.2, 202.3, 202.4, 202.5, 202.6) angeordnet an einer Außenseite (105, 205) eines Gehäuses (104, 204) einer Gondel (101, 201) einer Windkraftanlage (100) zur Kühlung von mindestens einer in dem Gehäuse (104, 204) angeordneten und zu kühlenden Komponente (112, 114, 116), wobei eine erste Kühlrippe (102, 202, 202.1, 202.2, 202.3, 202.4, 202.5, 202.6) im Vergleich zu der mindestens einen weiteren Kühlrippe (102, 202, 202.1, 202.2, 202.3, 202.4, 202.5, 202.6) einen geringeren Abstand zu einem an der Gondel (101, 201) angeordneten Rotor (106, 206) aufweist, wobei die Höhe (230) der ersten Kühlrippe (102, 202, 202.1, 202.2, 202.3, 202.4, 202.5, 202.6) zumindest geringer ist als die Höhe (230) der mindestens einen weiteren Kühlrippe (102, 202, 202.1, 202.2, 202.3, 202.4, 202.5, 202.6), wobei mindestens zwei Kühlrippen (102, 202, 202.1, 202.2, 202.3, 202.4, 202.5, 202.6) parallel zu der Rotorachse (126, 226) angeordnet sind oder mindestens eine Kühlrippe (102, 202, 202.1, 202.2, 202.3, 202.4, 202.5, 202.6) in Bezug zu der Rotorachse (126, 226) um einen Neigungswinkel (228) geneigt ist, wobei der Neigungswinkel (228) zwischen 2° und 85° ist.

## Claims

1. Nacelle (101, 201) of a wind turbine (100), comprising:
- at least one housing (104, 204) with an outer side (105, 205) and an inner side, and
- at least one component (112, 114, 116) located within the housing (104, 204) and to be cooled,
- wherein at least two cooling fins (102, 202, 202.1, 202.2, 202.3, 202.4, 202.5, 202.6) are arranged on the outer side (105, 205) of the housing (104, 204),
- wherein at least two cooling fins (102, 202, 202.1, 202.2, 202.3, 202.4, 202.5, 202.6) are arranged parallel to the rotor axis (126, 226) or at least one cooling fin (102, 202, 202.1, 202.2, 202.3, 202.4, 202.5, 202.6) is inclined relative to the rotor axis (126, 226) by an angle of inclination (228), wherein the angle of inclination (228) is between 2° and 85°,
**characterized in that**
- a first cooling fin (102, 202, 202.1, 202.2, 202.3, 202.4, 202.5, 202.6) has a smaller distance from a rotor (106, 206) arranged on the nacelle (101, 201) compared to the at least one further cooling fin (102, 202, 202.1, 202.2, 202.3, 202.4, 202.5, 202.6), and
- the height (230) of the first cooling fin (102, 202, 202.1, 202.2, 202.3, 202.4, 202.5, 202.6) is at least less than the height (230) of the at least one further cooling fin (102, 202, 202.1, 202.2, 202.3, 202.4, 202.5, 202.6),

2. Nacelle (101, 201) according to claim 1, **characterized in that** the angle of inclination (228) is between 5° and 65°.

3. Nacelle (101, 201) according to claim 2, **characterized in that** the angle of inclination is between 5° and 20°.

4. Nacelle (101, 201) according to claim 1, 2 or 3, **characterized in that** a plurality of cooling fins (102, 202, 202.1, 202.2, 202.3, 202.4, 202.5, 202.6) are inclined with respect to the rotor axis (126, 226) by the same angle of inclination (228).

5. Nacelle (101, 201) according to one of the previous claims, **characterized in that**
- the at least one component (112, 114, 116) to be cooled is at least one mechanical component (112),
and/or
- the at least one component (112, 114, 116) to be cooled is at least one electrical component (114, 116).

6. Nacelle (101, 201) according to claim 5, **characterized in that** the mechanical component (112) is a gear (112).

7. Nacelle (101, 201) according to claim 5, **characterized in that** the electrical component (114, 116) is a transformer (116) or a generator (114).

8. Nacelle (101, 201) according to one of the previous claims, **characterized in that** a heat conduction is formed between an inner side of the housing (104, 204) and the at least one component (112, 114, 116) to be cooled.

9. Nacelle (101, 201) according to claim 8, **characterized in that** the heat conduction is formed by a gas connection.

10. Wind turbine (100) comprising a nacelle (101, 201) according to one of the previous claims.

11. Wind turbine (100) according to claim 10, **characterized in that** the wind turbine (100) is an offshore wind turbine (100).

12. Use of at least two cooling fins (102, 202.2, 202.3, 202.4, 202.5, 202.6) arranged on an outer side (105, 205) of a housing of a nacelle (101, 201) of a wind turbine (100) for cooling at least one component (112, 114, 116) located within the housing (104, 204) and to be cooled, wherein a first cooling fin (102, 202.2, 202.3, 202.4, 202.5, 202.6) has a smaller distance to a rotor (106, 206) arranged on the nacelle (101, 201) in comparison with the at least one further cooling fin (102, 202, 202.1, 202.2, 202.3, 202.4, 202.5, 202.6), wherein the height (230) of the first cooling fin (102, 202, 202.1, 202.2, 202.3, 202.4, 202.5, 202.6) is at least less than the height (230) of the at least one further cooling fin (102, 202, 202.1, 202.2, 202.3, 202.4, 202.5, 202.6), wherein at least two cooling fins (102, 202, 202.1, 202.2, 202.3, 202.4, 202.5, 202.6) are arranged parallel to the rotor axis (126, 226) or at least one cooling fin (102, 202, 202.1, 202.2, 202.3, 202.4, 202.5, 202.6) is inclined with respect to the rotor axis (126, 226) by an angle of inclination (228), wherein the angle of inclination (228) is between 2° and 85°.

## Revendications

1. Nacelle (101, 201) d'éolienne (100), comprenant :
- au moins un boîtier (104, 204) présentant une face extérieure (105, 205) et une face intérieure, et
- au moins un composant (112, 114, 116) disposé à l'intérieur du boîtier (104, 204) et devant être refroidi,
- où au moins deux ailettes de refroidissement (102, 202, 202.1, 202.2, 202.3, 202.4, 202.5, 202.6) sont disposées au niveau de la face extérieure (105, 205) du boîtier (104, 204),
- au moins deux ailettes de refroidissement (102, 202, 202. 1, 202.2, 202.3, 202.4, 202.5, 202.6) sont disposées parallèlement à l'axe du rotor (126, 226) ou au moins une ailette de refroidissement (102, 202, 202.1, 202.2, 202.3, 202.4, 202.5, 202.6) est inclinée par rapport à l'axe du rotor (126, 226) d'un angle d'inclinaison (228), l'angle d'inclinaison (228) étant compris entre 2° et 85°,
**caractérisée**
- **en ce qu'**une première ailette de refroidissement (102, 202, 202.1, 202.2, 202.3, 202.4, 202.5, 202.6) a une distance plus faible par rapport à un rotor (106, 206) disposé au niveau de la nacelle (101, 201) que l'au moins une autre ailette de refroidissement (102, 202, 202.1, 202.2, 202.3, 202.4, 202.5, 202.6),
- et la hauteur (230) de la première ailette de refroidissement (102, 202, 202.1, 202.2, 202.3, 202.4, 202.5, 202.6) est au moins inférieure à la hauteur (230) de l'au moins une autre ailette de refroidissement (102, 202, 202.1, 202.2, 202.3, 202.4, 202.5, 202.6).

2. Nacelle (101, 201) selon la revendication 1, **caractérisée en ce que** l'angle d'inclinaison (228) est compris entre 5° et 65°.

3. Nacelle (101, 201) selon la revendication 2, **caractérisée en ce que** l'angle d'inclinaison est compris entre 5° et 20°.

4. Nacelle (101, 201) selon la revendication 1, 2 ou 3, **caractérisée en ce qu'**une pluralité d'ailettes de refroidissement (102, 202, 202.1, 202.2, 202.3, 202.4, 202.5, 202.6) sont inclinées par rapport à l'axe du rotor (126, 226) du même angle d'inclinaison (228).

5. Nacelle (101, 201) selon l'une des revendications précédentes, **caractérisée en ce que**
- l'au moins un composant (112, 114, 116) à refroidir est au moins un composant mécanique (112),
et/ou
- l'au moins un composant (112, 114, 116) à refroidir est au moins un composant électrique (114, 116).

6. Nacelle (101, 201) selon la revendication 5, **caractérisée en ce que** le composant mécanique (112) est une transmission (112).

7. Nacelle (101, 201) selon la revendication 5, **caractérisée en ce que** le composant électrique (114, 116) est un transformateur (116) ou un générateur (114).

8. Nacelle (101, 201) selon l'une des revendications précédentes, **caractérisée en ce qu'**une conduction thermique est formée entre une face intérieure du boîtier (104, 204) et l'au moins un composant (112, 114, 116) à refroidir.

9. Nacelle (101, 201) selon la revendication 8, **caractérisée en ce que** la conduction thermique est formée par une connexion gazeuse.

10. Installation éolienne (100) comprenant une nacelle (101, 201) selon l'une des revendications précédentes.

11. Installation éolienne (100) selon la revendication 10, **caractérisée en ce que** l'installation éolienne (100) est une installation éolienne offshore (100).

12. Utilisation d'au moins deux ailettes de refroidissement (102, 202, 202.1, 202.2, 202.3, 202.4, 202.5, 202.6) disposées sur une face extérieure (105, 205) d'un boîtier (104, 204) d'une nacelle (101, 201) d'une éolienne (100) pour refroidir au moins un composant (112, 114, 116) à refroidir disposé dans le boîtier (104, 204), où une première ailette de refroidissement (102, 202, 202.1, 202.2, 202.3, 202.4, 202.5, 202.6) a une distance plus faible par rapport à un rotor (106, 206) disposé au niveau de la nacelle (101, 201) que l'au moins une autre ailette de refroidissement (102, 202, 202.1, 202.2, 202.3, 202.4, 202.5, 202.6), la hauteur (230) de la première ailette de refroidissement (102, 202, 202.1, 202.2, 202.3, 202.4, 202.5, 202.6) est au moins inférieure à la hauteur (230) de l'au moins une autre ailette de refroidissement (102, 202, 202.1, 202.2, 202.3, 202.4, 202.5, 202.6), où au moins deux ailettes de refroidissement (102, 202, 202.1, 202.2, 202.3, 202.4, 202.5, 202. 6) sont disposées parallèlement à l'axe du rotor (126, 226) ou au moins une ailette de refroidissement (102, 202, 202.1, 202.2, 202.3, 202.4, 202.5, 202.6) est inclinée par rapport à l'axe du rotor (126, 226) d'un angle d'inclinaison (228), l'angle d'inclinaison (228) étant compris entre 2° et 85°.
